# EUROPEAN PATENT APPLICATION

(11) **EP 2 337 234 A1**
(43) Date of publication of application: **22.06.2011**
(21) Application number: 09823061.8
(22) Date of filing: 26.10.2009
(51) Int. Cl.: H04B 7/02

(54) **METHOD, APPARATUS AND SYSTEM FOR MULTI-ANTENNA TRANSMISSION**

(30) Priority: 29.10.2008 CN 200810225165
(71) Applicant: Huawei Technologies Co., Ltd., Shenzhen, Guangdong 518129 (CN)
(72) Inventor: YU, Gang, Longgang District Shenzhen 518129 (CN); LOU, Yuanzhi, Longgang District Shenzhen 518129 (CN)
(74) Representative: Kreuz, Georg Maria
(86) International application number: PCT/CN2009/074611
(87) International publication number: WO 2010/048869

(57) **Abstract**

A method for multi-antenna transmission includes allocating a different subcarrier resource or a different code resource to UE-specific reference signals (RSs) corresponding to each beamforming array of multiple beamforming arrays; and using the multiple input multiple output (MIMO) technology on the multiple beamforming arrays. The embodiments of present invention also provide a multi-antenna apparatus and system. Embodiments of the present invention implement combined use of MIMO and the beamforming technology, which brings the advantages of the beamforming technology and MIMO into full play. Therefore, the SNR is improved through the array gain of beamforming arrays to reduce the interference between users, and the channel capacity in the system and the spectrum efficiency are improved through MIMO.

## Description

This application claims priority to Chinese patent application No. 200810225165.3, titled "Method, apparatus, and system for multi-antenna transmission" filed with Chinese patent office on Oct. 29, 2008, the content of which is incorporated herein in its entirety.

### FIELD OF THE INVENTION

The present invention relates to communications technologies, and in particular, to a method, apparatus, and system for multi-antenna transmission.

### BACKGROUND OF THE INVENTION

Long term evolution (LTE) in the 3rd Generation Partnership Project (3GPP) is the evolution of the 3G network. The LTE improves the air access technology of the 3G network, adopts orthogonal frequency division multiplexing (OFDM) and multiple input multiple output (MIMO) as the core air interface technology of the radio network evolution, provides a peak rate of downlink 100 Mbit/s and uplink 50 Mbit/s under 20 MHz spectrum bandwidth so that the capacity of the cell is improved and the system delay is decreased.

The OFDM technology is a modulation technology of the concurrent transmission. The transmitter modulates a message onto multiple subcarriers for concurrent transmission. The subcarriers are orthogonal to each other, featuring high spectrum efficiency and effectively preventing the frequency selective attenuation. OFDM is a preferred technology for next generation broadband radio access system.

MIMO is an advanced multi-antenna technology in the radio communication system, in which multiple antennas at the transmitter are used to transmit signals independently and multiple antennas at the receiver are used to receive signals. MIMO is mainly used to improve the spectrum efficiency of the radio communication system through space flexibility provided by multiple transmitting and receiving antennas, so as to improve the transmission rate and signal quality. In this manner, without increasing the system bandwidth or total transmit power, the throughput and transmission distance are greatly increased.

Beamforming technology is another advanced multi-antenna technology. With this technology, multiple antennas form an antenna array, and the beamforming is generated by assigning certain weight values for the transmitted or received signals of the antenna arrays so that the transmitted or received signals are directional. This enhances the useful signals, prevents interference, and improves the signal-to-noise ratio (SNR).

The LTE protocol supports the multi-antenna technology such as MIMO and the beamforming technology, which facilitates application of the multi-antenna technology by providing supports such as code of the multiple antennas, reference signals (RSs) of the multiple antennas, and measurement feedback of the multiple antennas.

During the implementation of the invention, the inventor finds that:
MIMO and the beamforming technology supported by the current LTE protocol may only be used independently. To be specific, one of MIMO and the beamforming technology may be used in different cells, at different times, or for different users, that is, MIMO and the beamforming technology cannot be used for one user concurrently. Therefore, the advantages of MIMO and the beamforming technology may not be utilized effectively.

### SUMMARY OF THE INVENTION

Various embodiments of the present invention are directed to a method, apparatus, and system for multi-antenna transmission, which implements combined use of the both multi-antenna technologies of multiple input multiple output (MIMO) and the beamforming technology.

Embodiments of the present invention are implemented through the following technical solution.

One embodiment of the present invention provides a method for multi-antenna transmission. The method includes:
allocating a different subcarrier resource or a different code resource to UE-specific reference signals (RSs) corresponding to each beamforming array of multiple beamforming arrays; and
using the multiple input multiple output (MIMO) on the multiple beamforming arrays.

One embodiment of the present invention provides an apparatus for multi-antenna transmission. The apparatus includes:
a first unit, configured to allocate a different subcarrier resource or a code resource to UE-specific reference signals (RSs) corresponding to each beamforming array of multiple beamforming arrays; and
a transmitting unit, configured to transmit signals of the multiple beamforming arrays by using the multiple input multiple output (MIMO) technology.

One embodiment of the present invention provides a multi-antenna communication system, including an apparatus for multi-antenna transmission and a receiving apparatus.

The receiving apparatus is configured to receive signals transmitted by the apparatus for multi-antenna transmission, perform channel estimation according to the UE-specific RSs corresponding to each beamforming array, and receive and demodulate downlink signals transmitted from each beamforming array.

It can be seen from the preceding technical solutions that embodiments of the present invention implement combined use of both the MIMO and the beamforming technology. The MIMO transmission technology may be used on multiple beamforming arrays, which brings the advantages of the beamforming technology and MIMO into full play. Therefore, the SNR is improved through the array gain of the beamforming to reduce the interference between users, and the channel capacity in the system and the spectrum efficiency are improved through MIMO. Therefore, the technical solution provided in embodiments of the present invention is of practical value.

### BRIEF DESCRIPTION OF THE DRAWINGS

FIG. 1 is a schematic diagram of combination of MIMO and the beamforming technology according to one embodiment of the present invention;
FIG. 2 is a mapping of Cell-specific RSs according to one embodiment of the present invention;
FIG. 3 is a mapping of UE-specific RSs according to one embodiment of the present invention;
FIG. 4 is a flowchart of a method for multi-antenna transmission according to one embodiment of the present invention;
FIG. 5 is a schematic diagram of a grouping solution of the UE-specific RSs in the method for multi-antenna transmission according to one embodiment of the present invention;
FIG. 6 is a schematic diagram of another grouping solution of the UE-specific RSs in the method for multi-antenna transmission according to one embodiment of the present invention;
FIG. 7 is a flowchart of a method for multi-antenna transmission according to another embodiment of the present invention;
FIG. 8 is a structural view of a multi-antenna communication system according to one embodiment of the present invention; and
FIG. 9 is a structural view of a multi-antenna communication system according to another embodiment of the present invention.

### DETAILED DESCRIPTION OF THE EMBODIMENTS

The technical solution under the present invention is described below with reference to the accompanying drawings. Evidently, the embodiments described below are for the exemplary purpose only, without covering all embodiments of the present invention. Those skilled in the art can derive other embodiments from the embodiments provided herein without making any creative effort, and all such embodiments are covered in the protection scope of the present invention.

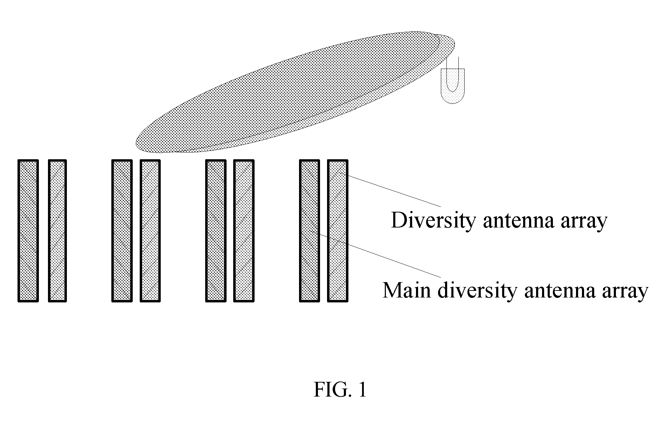

According to the method for multi-antenna transmission provided in embodiments of the present invention, to achieve the advantages of MIMO and the beamforming technology, these two technologies are combined to be used. That is, the multi-antenna transmission system supports MIMO and the beamforming technology concurrently. For example, a base station supports multiple antenna arrays, each of the antenna arrays uses the beamforming technology, and MIMO is used on the multiple antenna arrays. The MIMO technology includes a transmission diversity and space division multiplexing (SDM). The combination of MIMO and the beamforming technology is illustrated as an example in FIG. 1. As shown in FIG. 1, four main antennas form a main antenna array according to requirements of the beamforming technology, four diversity antennas form a diversity antenna array according to requirements of the beamforming technology, and MIMO is used on the main antenna array and the diversity antenna array. In this manner, the SNR can be improved through the array gain of beamforming to reduce the interference between the users, the channel capacity in the system and the spectrum efficiency can be further improved by using MIMO. Therefore, the technical solution of the present invention is of great practical value.

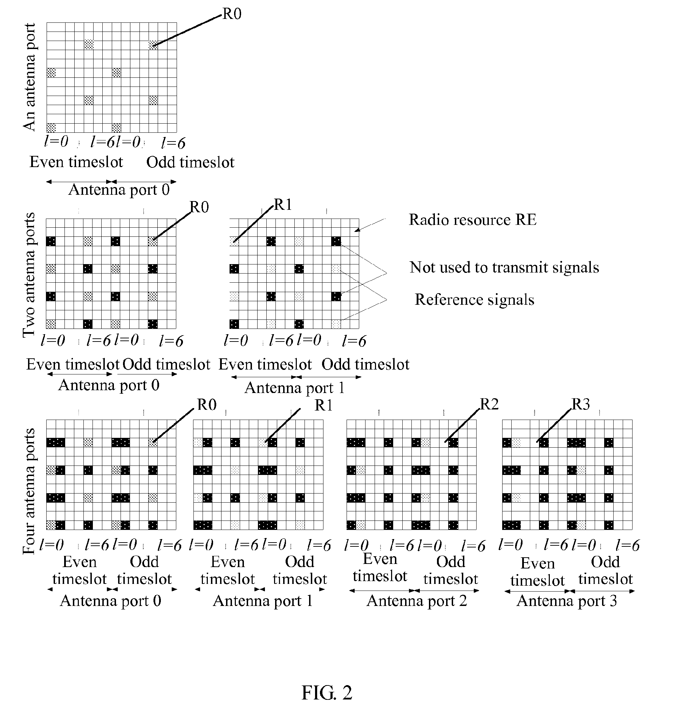

To support multi-antenna technologies, the LTE protocol considers the requirements of the demodulation of MIMO (which supports the downlink cell-specific RS mapping of one antenna, two antennas and four antennas) and the beamforming technology (which supports UE-specific RSs) in the design of the downlink reference signals (RSs). When MIMO is used in the downlink direction, the cell-specific RSs are used. The mapping of the cell-specific RSs used in MIMO is illustrated in FIG.2, where 1 is a symbol index. The cell-specific RSs are downlink common RSs. All user equipments (UEs) in a cell can receive and demodulate the downlink common RSs. The advantages of MIMO lie in that the SDM can be implemented through multiple code streams to improve the throughput of the system n times in the prerequisite that channel correlativity meets requirements.

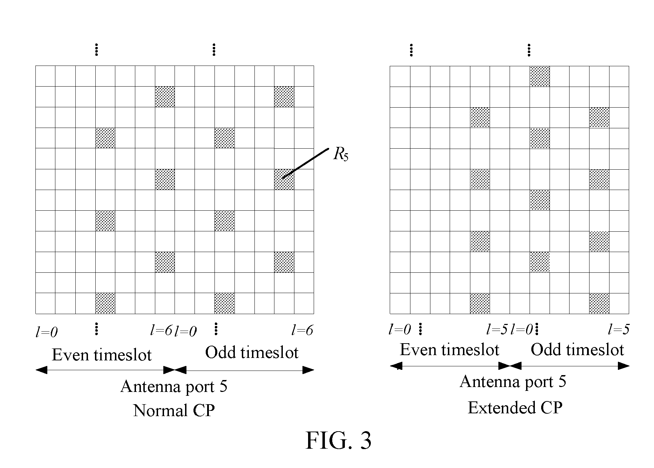

When the beamforming technology is used in the downlink direction, besides the cell-specific RSs, the UE-specific RSs are used for the beamforming demodulation. The mapping of the UE-specific RSs used in the beamforming technology is illustrated as an example in FIG. 3. The UE-specific RSs are dedicated RSs, and specifically used by the UE that uses beamforming to receive and demodulate beamforming signals. The antenna port 5 shown in FIG. 3 is a logic antenna port, which is the antenna port mapped to the beamforming array. The UE-specific RSs and the downlink data forming beamforming and sent to the UE use the same weight value to implement beamforming transmission. The advantages of the beamforming technology lie in that make the energy to target at the terminal through the weight of the antenna array so as to improve the signal-to-noise ratio (SNR) of the target terminal.

According to the current mapping of the UE-specific RSs, the combined use of MIMO and the beamforming technology described above is not supported because only one group of RSs are defined for the UE-specific RSs, that is, only one antenna array is supported. If MIMO is used upon multiple antenna arrays, each antenna array needs to be provided with dedicated RSs so that the RSs of multiple antenna arrays are not mutually interfered at the receiver. If each antenna array is not provided with dedicated RSs, the RSs of multiple antenna arrays may not be differentiated at the receiver, and the channel features of different MIMO channels may not be estimated. As a result, the signals transmitted by multiple antenna arrays may not be received and demodulated accurately.

One embodiment of the present invention provides a method for multi-antenna transmission. To implement the combined use of MIMO and the beamforming technology, the method improves the UE-specific RSs. By using this method, the UE-specific RSs support multiple beamforming arrays and MIMO is used upon the multiple beamforming arrays so that the multi-antenna technology is used for the same user in the same cell at the same time and the advantages of both MIMO and the beamforming technology are brought into full play. The improvements to the UE-specific RSs include: allocating a different subcarrier resource or a different code resource for the UE-specific RSs corresponding to each beamforming array, that is, different subcarrier resources are corresponding to different beamforming arrays or different code resources are corresponding to different beamforming arrays. The method for multi-antenna transmission includes: allocating a different subcarrier resource or a different code resources to UE-specific RSs corresponding to each beamforming array of multiple beamforming arrays, that is, different subcarrier resources are corresponding to different beamforming arrays or different code resources are corresponding to different beamforming arrays; and using MIMO on the beamforming arrays. Using MIMO on the beamforming arrays specifically includes: using MIMO on the beamforming arrays according to UE-specific RSs corresponding to each beamforming array.

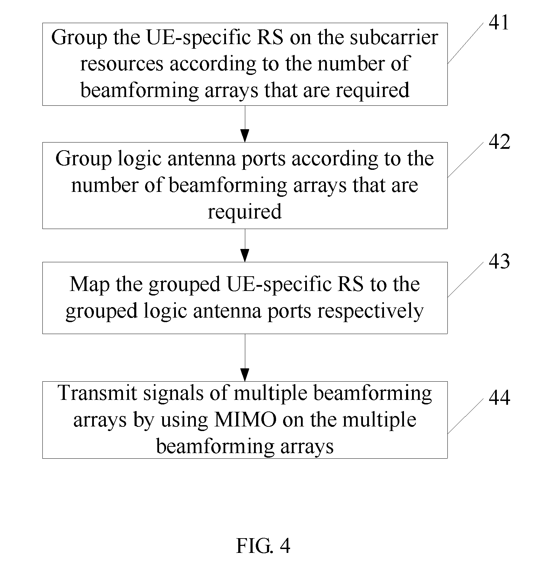

One detailed technical solution disclosed in embodiments of the present invention is illustrated in FIG. 4, which includes the following steps:
Step 41: Group the UE-specific RSs on the subcarrier resources according to the number of beamforming arrays that are required.

The grouping of the UE-specific RSs on the subcarrier resources refers to grouping the subcarrier resources used by the UE-specific RSs. To ensure that the receiver receives signals of multiple arrays correctly, the following factors need to be considered in the grouping process to facilitate channel estimation at a receiver: The subcarrier resources used by the UE-specific RSs corresponding to each antenna port are evenly distributed in an interleaving manner. It should be understood that other grouping modes may not affect the implementation described in the embodiments of the present invention. After the subcarrier resources used by the UE-specific RSs are grouped, each group of subcarrier resources is allocated to a beamforming array. The number of groups of the subcarrier resources used by the UE-specific RSs is the same as the number of beamforming arrays that are required.

Step 42: Group logic antenna ports according to the number of beamforming arrays that are required.

The number of grouped logic antenna ports is the same as the number of beamforming arrays. Therefore, the number of grouped logic antenna ports is the same as the number of groups of the subcarrier resources used by the UE-specific RSs.

The current protocol defines that if the UE-specific RSs are used, during layer mapping, the logic antenna port involved in data mapping is antenna port 5. Therefore, in embodiments of the present invention, antenna ports 5 are grouped into groups the number of which is equal to the number of beamforming arrays. For example, if two beamforming arrays are required, antenna ports 5 are grouped into two groups, namely, antenna port 5a and antenna port 5b.

Step 43: Map the grouped UE-specific RSs to the grouped logic antenna ports.

Step 44: Transmit signals of multiple beamforming arrays by using MIMO on the multiple beamforming arrays.

According to the preceding steps 41-43, the UE-specific RSs transmitted by the beamforming arrays are already grouped on the subcarrier resource. That is, the subcarrier resources used by the UE-specific RSs are grouped and the UE-specific RSs corresponding to the grouped subcarrier resources are mapped to the grouped logic antenna ports. Therefore, when signals of multiple beamforming arrays are transmitted with MIMO used on the multiple beamforming arrays, the rest of the multiple beamforming arrays do not transmit any signals with the subcarrier resources used by the UE-specific RSs corresponding to one of the multiple beamforming arrays.

When the UE receives the downlink signals, UE may perform channel estimation according to the UE-specific RSs corresponding to each beamforming array, and receive and demodulate the downlink signals transmitted by each beamforming array.

An embodiment is used as an example to illustrate the implementation.

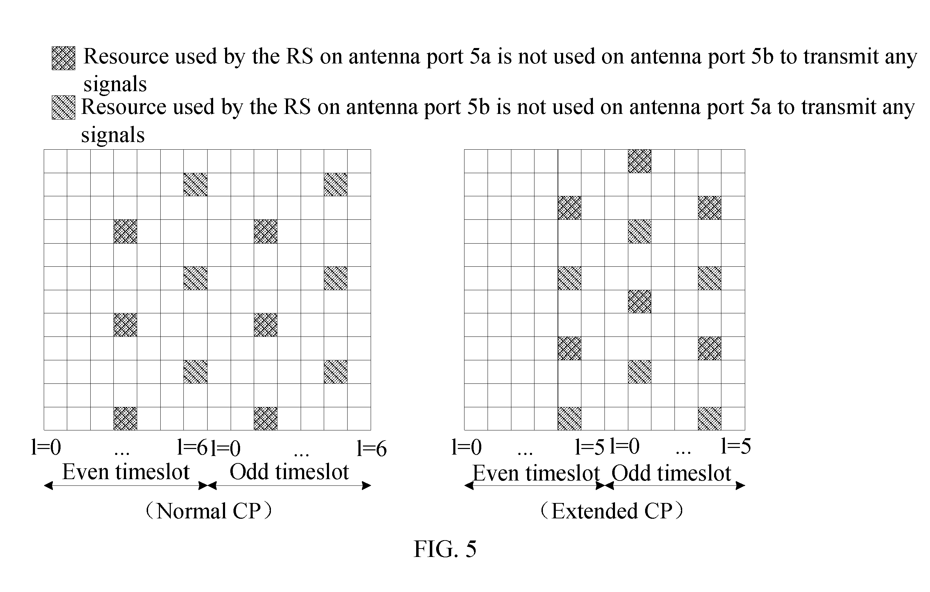

For example, as shown in FIG. 5, UE-specific RSs use the same resources (radio resources) described in the existing solution if two beamforming arrays are required to implement the transmit diversity or MIMO SDM on the two beamforming arrays. The resources used by the UE-specific RSs in one subframe are grouped into two groups, each group of resources being allocated to a beamforming array. Correspondingly, the logic antenna ports 5 at the layer mapping are grouped into antenna port 5a and antenna port 5b. At the layer mapping, two groups of UE-specific RSs are mapped to antenna port 5a and antenna port 5b respectively. Therefore, at antenna port 5b, no signal is transmitted with subcarrier resources while the subcarrier resources are used by the UE-specific RSs at antenna port 5a. Similarly, at antenna port 5a, no signal is transmitted with subcarrier resources while the subcarrier resources are used by the UE-specific RSs at antenna port 5b. This ensures that the subcarrier resources used by the UE-specific RSs used by two beamforming arrays do not interfere with each other. The UE may perform channel estimation according to the UE-specific RSs of two beamforming arrays and then receive and demodulate the signals transmitted from the two beamforming arrays when receiving downlink signals.

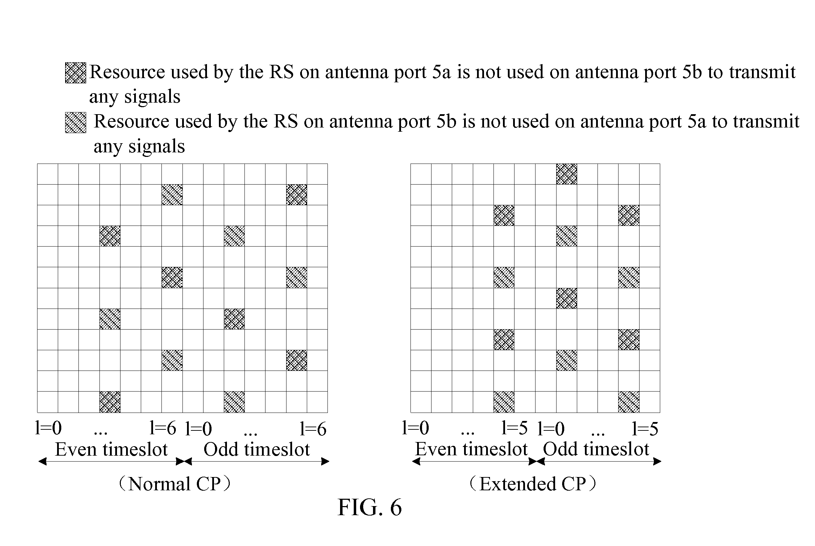

In this process, the grouping of the subcarrier resources used by the UE-specific RSs may be in the mode shown in FIG. 6. After the UE-specific RSs are grouped on the subcarrier resources, the number and distribution of subcarrier resources used by the UE-specific RSs is consistent with that in the current protocol. Each of the layer mapping logic ports (antenna port 5a and antenna port 5b) corresponding to the two beamforming arrays uses half of the subcarrier resources for the UE-specific RSs. It should be understood that the method disclosed in the preceding embodiment may also support more beamforming arrays. That is, the UE-specific RSs may be grouped into more groups on the subcarrier resources and the logic antenna ports may be grouped according to actual requirements. During the signal transmission, the rest of the beamforming arrays do not transmit any signals with the subcarrier resources used by the UE-specific RSs of one of the beamforming arrays. This ensures that the RSs of multiple antenna arrays' UE-specific RSs do not interfere with each other at the receiver, and the receiver may estimate the channel features of different MIMO channels accurately and receive and demodulate signals transmitted by the multiple antenna arrays accurately.

Embodiments of the present invention solves the problem that the mapping of downlink UE-specific RS defined in the current protocol supports only one beamforming array. With the UE-specific RS grouping scheme provided in embodiments of the present invention, the UE-specific RSs can support multiple beamforming arrays on which MIMO transmission diversity or MIMO SDM can be used so that the combined use of MIMO and the beamforming technology is supported. This brings into full play of the advantages of the beamforming technology and MIMO.

Furthermore, the technical solution provided in embodiments of the present invention is fully compatible with the current protocols. When multiple beamforming arrays are required, the number and distribution of subcarrier resources for the UE-specific RSs may be the same as that specified in the current protocols. Because the technical solution provided in embodiments of the present invention serves as an alternative solution, embodiments of the present invention do not exclude the case that the number and distribution of subcarrier resources used by the UE-specific RSs before grouping is different from the number and distribution of subcarrier resources used by the UE-specific RSs after grouping. The solution provided in embodiments of the present invention is also applicable to this case. Therefore, the method disclosed in embodiments of the present invention for grouping the subcarrier resources used by the UE-specific RSs is not limited to the embodiments. Those skilled in the art can easily make other grouping schemes based on the scheme disclosed in the embodiments of the present invention, which fall into the protection scope of the present invention.

One embodiment of the present invention provides another method for multi-antenna transmission. According to the method, MIMO is used on multiple beamforming arrays for combined use of MIMO and the beamforming technology, so that the multi-antenna technology is used for the same user in the same cell at the same time and the advantages of MIMO and the beamforming technology are brought into full play. The method includes the following steps:
Step 20: Determine beamforming arrays, and differentiate the UE-specific RSs corresponding to each of the beamforming array by using code division multiplexing (CDM).

To be specific, the number of beamforming arrays that are required is determined. Because each beamforming array requires its corresponding UE-specific RSs so that the UE receives and demodulates beamforming signals, only one group of RS are defined in the UE-specific RSs. The coded UE-specific RSs may be corresponding to the number of beamforming arrays that are required. In addition, because a different code resource is allocated to the UE-specific RSs of each beamforming array, that is, the code division multiplexing (CDM) mode is used, the RSs of the UE-specific RSs of multiple antenna arrays do not interfere with each other at the receiver, and the receiver may accurately estimate channel features of different MIMO channels and receive and demodulate the signals transmitted by the multiple antenna arrays correctly. Embodiments of the present invention use at least two beamforming arrays, and differentiate the UE-specific RSs of each beamforming array by using the CDM.

Step 21: The signal transmitter transmits the UE-specific RSs corresponding to each beamforming array and uses MIMO on the beamforming arrays.

To be specific, the transmitter transmits the UE-specific RSs corresponding to each beamforming array, the UE-specific RSs differentiated in CDM mode and transmits signals by using MIMO on the beamforming arrays.

When receiving the downlink signals, the UE may perform channel estimation according to the UE-specific RSs corresponding to each beamforming array, and receive and demodulate the downlink signals transmitted by each beamforming array.

Embodiments of the present invention differentiate the UE-specific RSs used by each beamforming array by using CDM and implement the combined use of MIMO and the beamforming technology, which brings the advantages of the beamforming technology and MIMO into full play. Therefore, the SNR is improved through the array gain of the beamforming to reduce the interference between users, and the channel capacity in the system and the spectrum efficiency are improved through MIMO. The technical solution is valuable and convenient. In addition, using the CDM mode to differentiate the UE-specific RSs used by each beamforming array is only an exemplary embodiment of the present invention, and the solution of the present invention is not limit to this. The present invention does not exclude other modes for differentiating the beamforming arrays to implement the combination use of the beamforming technology and MIMO.

One embodiment of the present invention provides a device for multi-antenna transmission, including a first unit and a transmitting unit. The first unit is configured to allocate a different subcarrier resource or a different code resource to UE-specific RSs corresponding to each beamforming array of multiple beamforming arrays, that is, different subcarrier resources are corresponding to different beamforming arrays or different code resources are corresponding to different beamforming arrays. The transmitting unit is configured to transmit signals by using MIMO on the beamforming arrays.

The first unit further includes: a first grouping unit, configured to group the UE-specific RSs on the subcarrier resources (grouping the subcarrier resources used by the UE-specific RSs) according to the number of beamforming arrays that are required; a second grouping unit, configured to group logic antenna ports according to the number of beamforming arrays that are required; and a layer mapping unit, configured to map the grouped UE-specific RSs to the grouped logic antenna ports.

Alternatively, the first unit may further include: a beamforming array setting unit, configured to differentiate the UE-specific RSs of the beamforming arrays by using the CDM mode.

Specifically, the transmitting unit is configured to transmit signals by using MIMO on the beamforming arrays according to the UE-specific RSs corresponding to each beamforming array.

Embodiments of the present invention implement combined use of MIMO and the beamforming technology. The MIMO transmission technology may be used on multiple beamforming arrays, which brings the advantages of the beamforming technology and MIMO into full play. Therefore, the SNR is improved through the array gain of the beamforming to reduce the interference between users, and the channel capacity in the system and the spectrum efficiency are improved through MIMO. This technical solution is of practical value.

The case that the network side transmits downlink signals to the terminal side is used as an example in the embodiments of the present invention for illustration only. It should be understood that in actual application, the multi-antenna apparatus provided in the embodiments of the present invention may be used to transmit uplink signals.

One embodiment of the present invention provides a multi-antenna communication system, including a multi-antenna transmitting apparatus and a receiving apparatus. The receiving apparatus is configured to receive signals transmitted by the multi-antenna transmitting apparatus 70, perform channel estimation according to the UE-specific RSs of each beamforming array, and receive and demodulate downlink signals transmitted from each beamforming array.

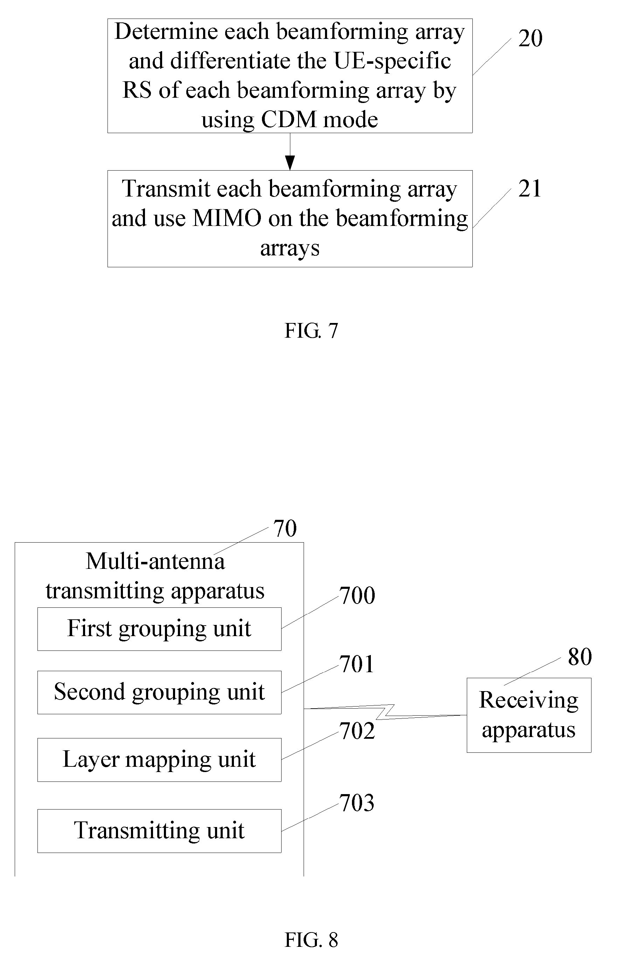

One embodiment of the present invention provides a multi-antenna communication system. As shown in FIG. 8, the system includes a multi-antenna transmitting apparatus 70 and a receiving apparatus 80. The multi-antenna transmitting apparatus 70 supports both the beamforming technology and MIMO and is configured to group UE-specific RSs on subcarrier resources according to the number of beamforming arrays that are required. To be specific, the multi-antenna transmitting apparatus 70 groups the subcarrier resources used by the UE-specific RSs and groups logic antenna ports according to the number of beamforming arrays that are required, maps the grouped UE-specific RSs to the grouped logic antenna ports respectively, and uses MIMO on the beamforming arrays. To implement this function, the multi-antenna transmitting apparatus 70 includes: a first grouping unit 700, a second grouping unit 701, a layer mapping unit 702, and a transmitting unit 703.

The first grouping unit 700 is configured to group the UE-specific RSs on the subcarrier resources according to the number of beamforming arrays that are required. To be specific, the first grouping unit 700 groups the subcarrier resources used by the UE-specific RSs and allocates each group of subcarrier resource to one beamforming array. The grouping needs to consider the factor that the subcarrier resources used by the UE-specific RSs of each antenna port are evenly distributed in an interleaving manner to facilitate channel estimation at a receiver. It should be understood that other grouping modes may not affect the implementation described in the embodiments of the present invention.

The second grouping unit 701 is configured to group logic antenna ports according to the number of beamforming arrays that are required.

The layer mapping unit 702 is configured to map the UE-specific RSs grouped by the first grouping unit 700 to the logic antenna ports grouped by the second grouping unit 701.

The transmitting unit 703 is configured to transmit signals by using MIMO on multiple beamforming arrays. The transmitting unit 703 transmits signals after the first grouping unit 700, the second grouping unit 701, and layer mapping unit 702 perform the operations. That is, the UE-specific RSs transmitted by the beamforming arrays are grouped on the subcarrier resources (the subcarrier resources used by the UE-specific RSs are grouped), and the grouped UE-specific RSs are mapped to the grouped logic antenna ports. Therefore, when signals are transmitted with MIMO used on multiple beamforming arrays, the rest of the beamforming arrays do not transmit any signals with the subcarrier resources used by the UE-specific RSs of one of the beamforming arrays.

The multi-antenna transmitting apparatus 70 is only an exemplary embodiment of the present invention, and the structure of the multi-antenna transmitting apparatus in the present invention is not limit to this. Different structure designs fall into the protection scope of the present invention, which supports that signals are transmitted with MIMO used on multiple beamforming arrays, and the rest of the beamforming arrays do not transmit any signals with the subcarrier resources used by the UE-specific RSs of one of the beamforming arrays.

The receiving apparatus 80 is configured to receive signals transmitted by the multi-antenna transmitting apparatus 70, perform channel estimation according to the UE-specific RSs of each beamforming array, and receive and demodulate downlink signals transmitted from each beamforming array.

The system of this embodiment may be any radio system using multi-antenna technology, for example, LTE.

With the UE-specific RS grouping scheme provided in embodiments of the present invention, the UE-specific RSs can support multiple beamforming arrays on which MIMO transmit diversity and SDM can be used so that the combined use of MIMO and the beamforming technology is supported. This brings into full play of the advantages of the beamforming technology and MIMO.

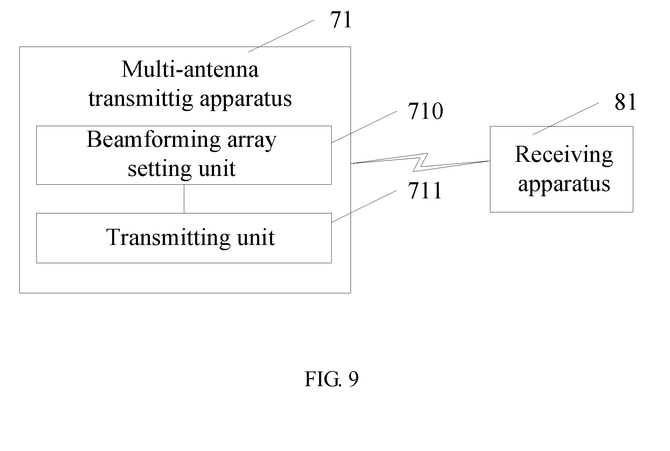

Another exemplary embodiment of the multi-antenna communication system in the present invention is as shown in FIG. 9. The system includes a multi-antenna transmitting apparatus 71 and a receiving apparatus 81. The multi-antenna transmitting apparatus 71 supports the combined use of the beamforming technology and MIMO and differentiates the UE-specific RSs of the beamforming arrays by using the CDM mode, and transmits signals by using MIMO on the beamforming arrays. To implement the function, the multi-antenna transmitting apparatus 71 includes:
a beamforming array setting unit 710, configured to determine beamforming arrays and differentiate UE-specific RSs of the beamforming arrays by using the CDM mode; and
a transmitting unit 711, configured to transmit the UE-specific RSs of the beamforming arrays and use MIMO on the beamforming arrays. That is, the UE-specific RSs of each beamforming array that are differentiated in CDM mode are transmitted and signals are transmitted with MIMO used on the beamforming arrays.

The multi-antenna transmitting apparatus 71 is only an exemplary embodiment of the present invention, but the structure of the multi-antenna transmitting apparatus in the present invention is not limit to this. Different structure designs fall into the protection scope of the present invention, which supports that signals are transmitted with MIMO used on multiple beamforming arrays, and the rest of the beamforming arrays do not transmit any signals with the subcarrier resources used by the UE-specific RSs of one of the beamforming arrays.

In addition, using the CDM mode to differentiate the UE-specific RSs of the beamforming is only an exemplary embodiment of the present invention, and the technical solution of the present invention is not limit to this. The present invention does not exclude other modes for differentiating the beamforming arrays to implement the combination use of the beamforming technology and MIMO.

The receiving apparatus 81 is configured to receive signals transmitted by the multi-antenna transmitting apparatus 71, perform channel estimation according to the UE-specific RSs of each beamforming array, and receive and demodulate downlink signals transmitted from each beamforming array.

Embodiments of the present invention implement combined use of MIMO and the beamforming technology by differentiating the UE-specific RSs through the code division multiplexing (CDM). The MIMO transmission technology may be used on multiple beamforming arrays, which brings the advantages of the beamforming technology and MIMO into full play. Therefore, the SNR is improved through the array gain of the beamforming to reduce the interference between users, and the channel capacity in the system and the spectrum efficiency are improved through MIMO. The technical solution is valuable and convenient for implementation.

In conclusion, embodiments of the present invention implement combined use of MIMO and the beamforming technology. The MIMO transmission technology may be used on multiple beamforming arrays, which brings the advantages of beamforming and MIMO into full play. Therefore, the SNR is improved through the array gain of the beamforming to reduce the interference between users, and the channel capacity in the system and the spectrum efficiency are improved through MIMO. This technical solution is of practical value.

Persons of ordinary skill in the art may understand that all or part of steps of the method according to the embodiments of the present invention may be implemented by a program instructing relevant hardware to execute the steps. The programs may be stored in a computer readable storage medium. When the programs are executed, the steps of the method in the embodiment are executed. The storage medium includes various mediums, such as a read-only memory (ROM), a random access memory (RAM), a magnetic disk or a compact disk, which can store program code.

In conclusion, the above are merely exemplary embodiments of the present invention. The scope of the present invention is not limited thereto. Variations or replacements readily apparent to persons skilled in the prior art within the technical scope of the present invention should fall within the scope of the present invention. Therefore, the protection scope of the present invention is defined by the appended claims.

## Claims

1. A method for multi-antenna transmission, comprising:
allocating a different subcarrier resource or a different code resource to UE-specific reference signals (RSs) corresponding to each beamforming array of multiple beamforming arrays; and
using the multiple input multiple output (MIMO) technology on the multiple beamforming arrays.

2. The method according to claim 1, wherein the allocating a different subcarrier resource comprises:
grouping the subcarrier resources used by the UE-specific RSs and grouping logic antenna ports according to the number of the multiple beamforming arrays; and
mapping the grouped UE-specific RSs to the grouped logic antenna ports.

3. The method according to claim 2, wherein the number of groups of the subcarrier resources and the number of the grouped logic antenna ports are the same as the number of the multiple beamforming arrays.

4. The method according to claim 2, wherein the grouping the subcarrier resources used by the UE-specific RSs is based on the following factor to facilitate channel estimation at a receiver:
the subcarrier resources used by the UE-specific RSs corresponding to each antenna port are evenly distributed in an interleaving manner.

5. The method according to claim 1, wherein the allocating a different code resource comprises:
differentiating the US-specific RSs corresponding to each beamforming array by using a code division multiplexing (CDM) mode.

6. The method according to claim 1, wherein the using the MIMO technology on the multiple beamforming arrays comprises:
using the MIMO technology on the multiple beamforming arrays according to the UE-specific RSs corresponding to each beamforming array.

7. An apparatus for multi-antenna transmission, comprising:
a first unit, configured to allocate a different subcarrier resource or a different code resource to UE-specific reference signals (RSs) corresponding to each beamforming array of multiple beamforming arrays; and
a transmitting unit, configured to use the multiple input multiple output (MIMO) technology on the multiple beamforming arrays.

8. The apparatus according to claim 7, wherein the first unit further comprises:
a first grouping unit, configured to group the subcarrier resources used by the UE-specific RSs according to the number of the multiple beamforming arrays that are required;
a second grouping unit, configured to group logic antenna ports according to the number of the multiple beamforming arrays that are required; and
a layer mapping unit, configured to map the UE-specific RSs grouped by the first grouping unit to their respective logic antenna ports grouped by the second grouping unit.

9. The apparatus according to claim 8, wherein the grouping by the first grouping unit is based on the following factor to facilitate channel estimation at a receiver: the subcarrier resources used by the UE-specific RSs corresponding to each antenna port are evenly distributed in an interleaving manner.

10. The apparatus according to claim 7, wherein the first unit further comprises:
a beamforming array setting unit, configured to differentiate the UE-specific RSs corresponding to each beamforming array by using a code division multiplexing (CDM) mode.

11. A multiple antenna communication system, comprising: an apparatus for multi-antenna transmission according to any one of claims 7-10 and a receiving apparatus, wherein the receiving apparatus is configured to receive signals transmitted by the apparatus for multi-antenna transmission, perform channel estimation according to UE-specific reference signals (RSs) of each beamforming array, and receive and demodulate downlink signals transmitted from each beamforming array.
